# EUROPÄISCHE PATENTSCHRIFT

(11) **EP 1 705 889 B1**
(45) Veröffentlichungstag und Bekanntmachung des Hinweises auf die Patenterteilung: **19.11.2008**
(21) Anmeldenummer: 06110271.1
(22) Anmeldetag: 22.02.2006
(51) Int. Cl.: H04M 7/00

(54) **Verfahren zum schnellen Aufbauen einer Nutzdatenverbindung zwischen Kommunikationsendeinrichtungen**
Method for fast setup of a bearer connection between communications terminals
Procédé pour l'établissement rapide d'un raccordement de porteur entre des terminaux de réseau

(30) Priorität: 23.03.2005 DE 102005013544
(43) Veröffentlichungstag der Anmeldung: 27.09.2006
(73) Patentinhaber: Siemens Enterprise Communications GmbH & Co. KG, 81379 München (DE)
(72) Erfinder: Kennedy, Stephan, 86949, Windach (DE)
(74) Vertreter: Maier, Daniel Oliver

(56) Entgegenhaltungen:
- US-B1- 6 597 702
- US-B1- 6 671 367

## Beschreibung

Bei zeitgemäßen Kommunikationssystemen ist bekannt, Nutzdaten, z.B. zur Sprach-, Video- oder Multimediakommunikation über paketorientierte Netzwerke zu übermitteln. Durch die Verwendung paketorientierter Datenübertragungsverfahren ergeben sich häufig Einbußen in der Qualität der zu übertragenden Nutzdaten, welche häufig durch Konvertierungen und Verzögerungen von Nutzdatenpaketen durch Netzwerkknoten bedingt sind.

In Anlehnung an das häufig zum Einsatz kommende »Internet Protocol«, abkürzend auch mit IP bezeichnet, wird im folgenden auf Kommunikationsendgeräte, welche auf Basis einer paketorientierten Übertragungstechnik arbeiten, auch mit dem Begriff »IP-Endeinrichtung« Bezug genommen. Bei der paketorientierten Übertragung von Nutzdaten ist auch der Begriff »Voice over IP«, abkürzend VoIP geläufig. Für die VoIP-Kommunikation ist dabei die ITU-T-Empfehlung (International Telecommunication Union - Telecommunications Standardization Sector) H.323 bzw. das von der Arbeitsgruppe IETF (Internet Engineering Task Force) entwickelte Protokoll SIP (Session Initiation Protocol) weit verbreitet.

Zur Konvertierung zwischen leitungsorientierten und paketorientierten Übertragungstechniken werden so genannte Gateways verwendet, wobei diese häufig jeweils zwischen einem paketorientiertem Netzwerk und einer nach einem leitungsvermittelnden Verfahren arbeitenden Kommunikationseinrichtung angeordnet sind. Die Gateways enthalten dabei Mittel zur wechselseitigen Umsetzung von Datenströmen in Datenpakete. Diese Umsetzung betrifft dabei sowohl Signalisierungsdaten als auch Nutzdaten, insbesondere also Sprach-, Videodaten oder auch so genannte nicht-sprachliche Nutzdaten wie beispielsweise Tonsignale von Fernkopiereinheiten oder Modems. Die Nutzdaten werden in der Fachwelt auch »Payload« genannt.

Für Gateways, sogenannte Gatekeeper, sowie für Einrichtungen, welche neben den vorgenannten Einheiten als eigenständige Einheit an einem Rufaufbau oder -vermittlung beteiligt sind, wird im Zuge einer allgemeineren Darstellung im Folgenden auch der Begriff »Verbindungssteuerung« verwendet. Diese Verbindungssteuerungen ermöglichen bei einem Rufaufbau oder bei einer aufgebauten Verbindung einen Austausch von Signalisierungen und Payload zwischen IP-Endeinrichtungen. Dabei werden sowohl diese Signalisierungen als auch die Payload häufig über die Verbindungssteuerungen geleitet.

Ein Kommunikationssystem ist häufig durch eine Strukturierung in einzelne Subnetzwerke gekennzeichnet, wobei üblicherweise jedes Subnetzwerk durch eine Kommunikationseinrichtung verwaltet wird. Die Kommunikationseinrichtungen arbeiten zur Übermittlung von Nutz- bzw. Signalisierungsdaten je nach der notwendigen paketorientierten oder leitungsorientierten Anschlussbauweise der verbundenen Kommunikationsendgeräte häufig nach unterschiedlichen Übertragungsverfahren oder Übertragungsprotokollen.

Jede der Kommunikationseinrichtungen in den Subnetzwerken kann dabei eine Verbindungssteuerung enthalten, die ihr zugeordnete IP-Endeinrichtungen verwaltet. Ein Verbindungsaufbau und die Payload zwischen zwei IP-Endeinrichtungen kann dabei über mehrere Verbindungssteuerungen geleitet werden, sofern sich die aufzubauende Kommunikationsverbindung über mehrere Subnetzwerke erstreckt. Dies kann zu einer Verlangsamung des Verbindungsaufbaus z.B. durch Pufferung in den Verbindungssteuerungen führen. Weiterhin ist in vielen Fällen eine mehrmalige Konvertierung in das vom jeweiligen Subnetzwerk unterstützte Übertragungsverfahren oder -protokoll notwendig. Dies kann zu einer Verschlechterung der Verbindungsqualität durch mehrmaliges De- und Enkodieren, Datenkompression in den Teilverbindungen und Verzögerungen in den Verbindungssteuerungen führen.

Bei einem üblichen Verbindungsaufbau zwischen zwei IP-Endeinrichtungen über eine Verbindungssteuerung einer Kommunikationseinrichtung, werden für die beiden Teilverbindungen von der ersten IP-Endeinrichtung zur Verbindungssteuerung und von der Verbindungssteuerung zu der zweiten IP-Endeinrichtung über Signalisierungsmeldungen und Quittungsmeldungen insbesondere Kodierverfahren und Payloadtransportadressen der Kommunikationspartner für die jeweiligen Teilverbindungen ausgetauscht und ausgehandelt. Bei Verbindungsannahme durch die gerufene IP-Endeinrichtung wird die Payload über die erste und die zweite Teilverbindung an die jeweiligen Payloadtransportadressen der Kommunikationspartner mit dem ausgehandelten Kodierverfahren der jeweiligen Teilverbindungen übermittelt, wobei in der Verbindungssteuerung eine Pufferung sowie ein De- und Enkodieren der Payload mit dem Kodierverfahren der Teilverbindungen durchgeführt wird.

Zur Verbesserung zumindest einiger der genannten Nachteile können IP-Endeinrichtungen, die die ITU-T-Empfehlung H.323 und Direct Media Connection (DMC) unterstützen, Kommunikationsnutzdaten direkt zwischen den IP-Endeinrichtungen unter Umgehung der Verbindungssteuerungen übermitteln und damit zusätzliche Konvertierungen und Verzögerungen vermeiden. Dabei wird üblicherweise - auf Veranlassung einer Verbindungssteuerung, eine zusätzliche Signalisierungs- und Payloadverbindung direkt zwischen den IP-Endeinrichtungen aufgebaut, so dass die IP-Endeinrichtungen Verbindungen zur jeweils anderen IP-Endeinrichtung und zur Verbindungssteuerung aufweisen. Nachteilig ist dabei jedoch, dass die IP-Endeinrichtungen das DMC-Protokoll unterstützen müssen, dass Signalisierungs- und Payloadverbindungen zwischen allen drei beteiligten Kommunikationspartnern aufgebaut werden und sich somit ein erhöhter Ressourcenbedarf ergibt. Weiterhin ist nachteilig, dass DMC keine direkte Medienkopplung für SIP-Endeinrichtungen ermöglicht.

Aus den Patent-Veröffentlichungen WO 03/096648 A1, WO 01/08434 A1, GB 2350261 A und EP 1205082 B1 sind verschiedene Verbindungsaufbauverfahren für unterschiedliche Arten von Netzwerken unter Einbeziehung von weiteren Netzwerkknoten zwischen diesen Netzwerkknoten und/oder Endeinrichtungen bekannt. Darüber hinaus ist aus der U.S.-Patent-Veröffentlichungsschrift US 2003/0219006 A1 ein Verfahren bekannt, bei dem Verzögerungen in einer Kommunikation über H.323-Gateways verringert und eine Video- und Audioqualität verbessert werden.

Darüber hinaus ist aus der US-Patentschrift US 6,671,367 B1 ein Verfahren zum Aushandeln von Funktionsfähigkeiten, insbesondere Kodierparametern, zwischen Signalisierungspunkten in einem Telekommunikationssystem bekannt. Ein weiteres Verfahren zum Abstimmen von Kodierparametern zwischen Endeinrichtungen wird des Weiteren in der Patentschrift US 6,597,702 B1 erläutert, hauptsächlich um eine Verwendung von Ressourcen zu verbessern.

Es ist Aufgabe der vorliegenden Erfindung ein flexibleres Verfahren zum Aufbauen einer Nutzdatenverbindung zwischen Endeinrichtungen anzugeben.

Gelöst wird diese Aufgabe durch ein Verfahren mit den Merkmalen nach Patentanspruch 1. Vorteilhafte Ausführungsformen der Erfindung sind in den abhängigen Ansprüchen angegeben.

Bei dem erfindungsgemäßen Verfahren wird zum Aufbauen einer Nutzdatenverbindung zwischen einer ersten, an eine erste Verbindungssteuerung - vorzugsweise paketorientiert - gekoppelte Endeinrichtung und einer zweiten, an eine zweite Verbindungssteuerung - vorzugsweise paketorientiert - gekoppelte Endeinrichtung, von der ersten Endeinrichtung eine Verbindungsaufbausignalisierung zur zweiten Verbindungssteuerung initiiert. Die Endeinrichtung kann dabei z.B. eine IP-Endeinrichtung wie ein IP-Telefon, eine Multimediaapplikation oder ein IP-Softclient eines PCs sein. Die Verbindungssteuerung kann beispielsweise ein Gateway mit einem Übergang zu einem leitungsorientierten Netzwerk oder ein Gatekeeper, der Leistungsmerkmale für die Endeinrichtung bereitstellt, sein. Im Rahmen der Verbindungsaufbausignalisierung werden für die erste Endeinrichtung spezifische, erste Nutzdatenparameter, zu einer der Verbindungssteuerungen übermittelt. Nutzdatenparameter können dabei z.B. Endeinrichtung-spezifische Parameter für die aufzubauende Nutzdatenverbindung sein, insbesondere eine Adressinformation - z.B. eine IP-Adresse - über die die Endeinrichtung für die Nutzdatenverbindung adressiert wird. Weiterhin können durch die Nutzdatenverbindung z.B. die von der Endeinrichtung unterstützten Kodierverfahren identifiziert werden. Infolge der Verbindungsaufbausignalisierung wird von der zweiten Verbindungssteuerung eine Verbindungsaufbaumeldung ohne die ersten Nutzdatenparameter zur zweiten Endeinrichtung übermittelt. Bei Verbindungsannahme durch die zweite Endeinrichtung wird eine Verbindungsannahmemeldung von der zweiten Endeinrichtung zu einer der Verbindungssteuerungen übermittelt und infolgedessen werden die ersten Nutzdatenparameter zur zweiten Endeinrichtung übermittelt. Infolge eines Eintreffens der ersten Nutzdatenparameter bei der zweiten Endeinrichtung wird die Nutzdatenverbindung von der zweiten Endeinrichtung zur ersten Endeinrichtung aufgebaut.

Dieses Verfahren ist insbesondere vorteilhaft, sofern die IP-Endeinrichtungen den SIP-Standard gemäß RFC3261 oder den SIP-Standard inklusive Erweiterungen unterstützen. Somit können die Nutzdatenparameter in SIP-Meldungen, z.B. in einer Verbindungsannahmequittung (Meldungsnummer 200), gemäß PRACK (Provisional Reliable Responses Acknowledgement, definiert in RFC3262) mit Meldungen "Ringing" (Meldungsnummer 180) und "Session Progress" (Meldungsnummer 183), gemäß SIP-Re-Invite-Methode und deren Verbindungsquittung, oder gemäß SIP-Update-Methode (definiert in RFC3311) und deren Verbindungsquittung. Die Nutzdatenparameter werden dabei üblicherweise gemäß SDP kodiert und in SIP-Meldungen transportiert.

Vorzugsweise kann zumindest einer der Verbindungssteuerungen Nutzdatenparameter zwischenspeichern. So können die ersten Nutzdatenparameter in einer der beiden Verbindungssteuerungen gespeichert und bei Verbindungsannahme von dieser Verbindungssteuerung an die zweite Endeinrichtung übermittelt werden. Dadurch können die ersten Nutzdatenparameter schneller an die zweite Endeinrichtung übermittelt werden, als wenn sie erst von der ersten Endeinrichtung angefordert werden müssten. Insbesondere ist vorteilhaft, wenn im Rahmen der Verbindungsaufbausignalisierung die ersten Nutzdatenparameter von der ersten Endeinrichtung zur ersten Verbindungssteuerung, von dort zur zweiten Verbindungssteuerung übermittelt werden und in dieser gespeichert werden. In diesem Fall können die ersten Nutzdatenparameter bei der direkt an die zweite Endeinrichtung gekoppelten Verbindungssteuerung vorliegen, was eine schnelle Übermittlung bei der Verbindungsannahme ermöglicht.

Gemäß einer Weiterbildung dieses Verfahrens können infolge eines Eintreffens der Verbindungsaufbaumeldung für die zweite Endeinrichtung spezifische, zweite Nutzdatenparameter von der zweiten Endeinrichtung zur ersten Endeinrichtung übermittelt werden. Infolge eines Eintreffens der zweiten Nutzdatenparameter bei der ersten Endeinrichtung kann dann eine Nutzdatenteilverbindung von der ersten Endeinrichtung zur zweiten Endeinrichtung aufgebaut werden.

In einer bevorzugten Ausführungsform können die Nutzdatenverbindung und/oder die Nutzdatenteilverbindung unter Umgehung mindestens einer der Verbindungssteuerungen aufgebaut werden. Besonders vorteilhaft kann dabei die Nutzdatenverbindung und die Nutzdatenteilverbindung unter Umgehung aller Verbindungssteuerungen aufgebaut werden, so dass sich im Nutzdatenpfad keine Verbindungssteuerungen befinden und somit insbesondere Verzögerungen und eine Verschlechterung der Sprachqualität z.B. durch mehrmaliges De- und Enkodieren vermieden werden kann.

Nach einer weiteren Ausführungsform können beide Endeinrichtungen an dieselbe Verbindungssteuerung gekoppelt sein.

In einer weiteren Ausführungsform können die Endeinrichtungen über eine Kette von Verbindungssteuerungen gekoppelt sein. Die Kopplung der Verbindungssteuerungen untereinander kann dabei paketorientiert oder leitungsorientiert sein, und mittels Standard-Methoden, z.B. gemäß SIP oder H.323, oder durch proprietäre Methoden durchgeführt werden. Dabei ist es besonders vorteilhaft, wenn in der Signalisierung zwischen den Verbindungssteuerungen auch die Nutzdatenparameter der Endeinrichtungen übertragen werden können.

Bei einer hierarchischen Anordnung der Verbindungssteuerungen können Signalisierungen entsprechend der hierarchischen Anordnung über mehrere Verbindungssteuerungen übermittelt werden. Somit können die Signalisierungen z.B. von der ersten Verbindungssteuerung zu einer weiteren, dazwischen gelegenen Verbindungssteuerung weitergeleitet werden, und von dort zur zweiten Verbindungssteuerung. Folgesignalisierungen können dann ebenfalls über dieselben Verbindungssteuerungen übermittelt werden oder direkt zwischen zwei der Verbindungssteuerungen unter Umgehung weiterer Verbindungssteuerungen übermittelt werden. Letzteres kann anhand von Informationen erfolgen, die Verbindungssteuerungen, die an den Signalisierungen beteiligt sind, aus der Signalisierung entnehmen können. Somit können auch bestehende Signalisierungsteilverbindungen für diejenigen Folgesignalisierungen umgangen werden, die keinen Transport von Nutzdatenparametern der Endeinrichtungen erlauben. Dadurch kann eine Signalisierung zwischen der zweiten Endeinrichtung und der ersten Verbindungssteuerung unter Umgehung der zweiten und der weiteren Verbindungssteuerung erfolgen, insbesondere wenn die zweite Endeinrichtung und die erste Verbindungssteuerung H.323 und DMC unterstützt.

Gemäß einer Weiterbildung des erfindungsgemäßen Verfahrens kann ein Medien-Server, z.B. zum Generieren von Ansagen oder zum Durchführen von Call-Center-Funktionen, mit einer der Verbindungssteuerungen - insbesondere paketorientiert - gekoppelt oder in die Verbindungssteuerung integriert sein. Somit kann im Rahmen der Verbindungsaufbausignalisierung eine Vorab-Nutzdatenverbindung, auch Early-Media-Payloadverbindung genannt, zwischen dem Medien-Server und der erster Endeinrichtung aufgebaut werden. Dabei ist es besonders vorteilhaft, wenn die Vorab-Nutzdatenverbindung solange bestehen bleibt, bis die zweite Endeinrichtung die Verbindung annimmt, da somit während des gesamten Verbindungsaufbaus auf Ereignisse, z.B. Tastendruck von der ersten Endeinrichtung, reagiert werden kann bzw. der ersten Endeinrichtung z.B. Ansagen oder eine Weiterleitung auf ein Mailbox-System bereitgestellt werden können.

Für die Kommunikation zur ersten Endeinrichtung können dabei vorteilhafterweise, in einem Entwurf der IETF definierte Methoden "Sipping-Early-Media" und "Sipping-Early-Disposition" (Sipping: Session Initiation Protocol Project Investigation Working Group)verwendet werden.

In einer bevorzugten Ausführungsform des Verfahrens kann infolge des Eintreffens einer im Rahmen der Verbindungsaufbausignalisierung übermittelten Meldung oder der ersten Nutzdatenparameter bei der zweiten Endeinrichtung die zweite Endeinrichtung eine eingehende Verbindung anzeigen. Insbesondere kann ein akustisches oder optisches Signal an den Benutzer der zweiten Endeinrichtung ausgegeben werden, oder eine Meldung zu einer Applikation, die auf die Verbindungsaufbausignalisierung programmgesteuert reagieren kann, übermittelt werden. So ein akustisches Signal ist z.B. ein Klingelton an einem IP-Telefon, der einen eingehenden Ruf signalisiert. Es kann erreicht werden, dass während die eingehende Verbindung angezeigt wird, die weiteren Schritte der Verbindungsaufbausignalisierung zwischen den Endeinrichtungen und den Verbindungssteuerungen durchgeführt werden, so dass bei Verbindungsannahme eine schnelle Durchschaltung der direkten Nutzdatenverbindung erfolgen kann. Weiterhin kann erreicht werden, dass, während die eingehende Verbindung angezeigt wird, die direkte Nutzdatenverbindung noch nicht aufgebaut wird, um weiterhin eine ev. bestehende Vorab-Nutzdatenverbindung verwenden zu können.

Gemäß einer Weiterbildung dieses Verfahrens können infolge der Verbindungsannahme durch die zweite Endeinrichtung und des Eintreffens der zweiten Nutzdatenparameter bei der ersten Endeinrichtung für die erste Endeinrichtung spezifische, dritte Nutzdatenparameter von der ersten Endeinrichtung an die zweite Endeinrichtung übermittelt werden. Dabei können sich die dritten Nutzdatenparameter von den ersten Nutzdatenparametern unterscheiden, um z.B. auf geänderte Kommunikationsverhältnisse zu reagieren. Beispielsweise kann in den dritten Nutzdatenparametern ein anderes Kodierverfahren oder eine andere Adresse für den Empfang von Nutzdaten angegeben werden.

Ein Ausführungsbeispiel der Erfindung wird nachfolgend anhand der Zeichnung näher erklärt.

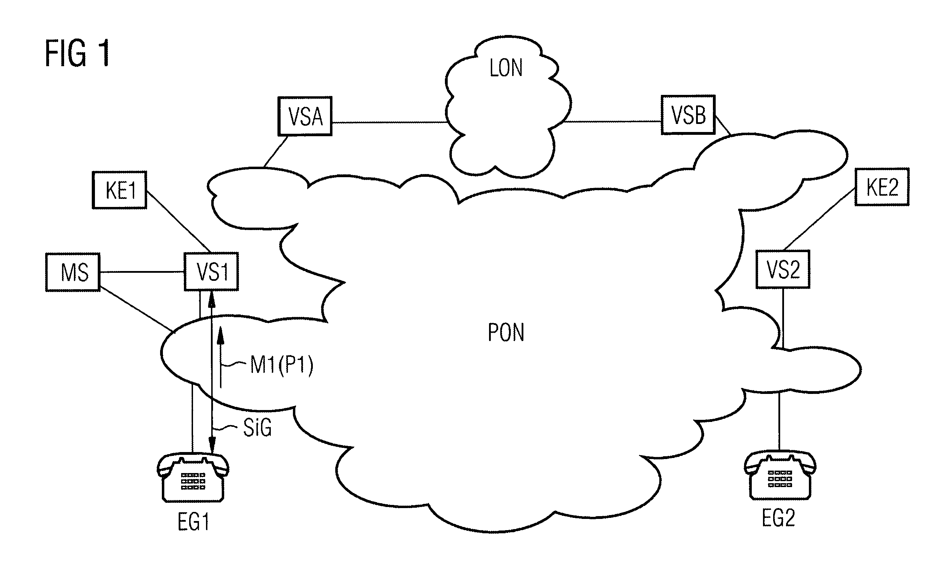

Dabei zeigen in schematischer Darstellung die
- Figuren 1-9: ein Kommunikationssystem mit zwei über Verbindungssteuerungen miteinander gekoppelten IP-Telefonen.

In Figuren 1-9 ist ein Kommunikationssystem mit zwei IP-Telefonen als erste und zweite Endeinrichtung EG1, EG2 schematisch dargestellt. Die erste Endeinrichtung EG1 - alternativ auch ein IP-Softclient oder eine Multimediaapplikation - ist paketorientiert über ein paketorientiertes Netzwerk PON an einen ersten Gateway VS1 als erste Vermittlungssteuerung gekoppelt. Hierbei ist der erste Gateway VS1 an die Kommunikationseinrichtung KE1 leitungsorientiert gekoppelt, wobei diese als Konvergenz-Kommunikationsserver zur direkten Anbindung von leitungsorientierten Endgeräten (nicht dargestellt) und zur Ankopplung von paketorientierten Endeinrichtungen über den ersten Gateway VS1 realisiert ist. Nach der SIP-Terminology ist dabei ein Gateway ein sogenannter "SIP-backto-back user agent" (B2BUA). An den Gateway VS1 ist weiterhin ein Medien-Server MS angeschlossen, der wiederum eine paketorientierte Schnittstelle zum paketorientierten Netwerk PON besitzt. Die zweite Endeinrichtung EG2 ist über das paketorientierte Netzwerk PON an einen zweiten Gateway VS2 gekoppelt, der wiederum leitungsorientiert an eine Kommunikationseinrichtung KE2 gekoppelt ist. Weiterhin sind weitere Verbindungssteuerungen VSA und VSB an das paketorientierte Netzwerk PON gekoppelt. Zusätzlich besitzen die weitere Verbindungssteuerungen VSA, VSB jeweils eine Schnittstelle zu einem leitungsorientierten Netzwerk LON, z.B. einem privaten oder öffentlichen ISDN- oder Analognetz.

In den Figuren 1-9 werden Verbindungen und Meldungen in dem Kommunikationssystem veranschaulicht, die im Rahmen des vorliegenden Ausführungsbeispiels übermittelt werden. Signalisierungsverbindungen SIG,DSIG im Rahmen der Verbindungsaufbausignalisierung werden durch mit Doppelpfeilen versehenen, durchgezogenen Linien zwischen den an der Signalisierung beteiligten Komponenten dargestellt, Meldungen M,M1,M2,MMS die über diese Signalisierungsverbindungen SIG,DSIG übermittelt werden durch einfache Pfeile. Nutzdatenverbindungen NV, Nutzdatenteilverbindungen NTV und Vorab-Nutzdatenverbindungen VNV werden durch mit Doppelpfeilen versehene, gestrichelte Linien veranschaulicht.

Dabei werden über die Nutzdatenverbindung NV und die Nutzdatenteilverbindung NTV vorzugsweise sogenannte Real-Time-Kommunikation wie Sprache und/oder Video, insbesondere gemäß dem RTP-Protokoll (RTP: Real-Time Protocol), übermittelt. Weiterhin ist die Nutzdatenverbindung NV insbesondere eine gerichtete, paketorientierte Verbindung ausgehend von der zweiten Endeinrichtung EG2 in Richtung der ersten Endeinrichtung EG1, und die Nutzdatenteilverbindung NTV insbesondere eine gerichtete, paketorientierte Verbindung ausgehend von der ersten Endeinrichtung EG1 in Richtung der zweiten Endeinrichtung EG2. Somit ist mit der Nutzdatenverbindung NV und der Nutzdatenteilverbindung NTV eine bidirektionale Kommunikation zwischen der ersten und zweiten Endeinrichtung EG1, EG2 möglich.

In einer Komponente zumindest zeitweise gespeicherte Nutzdatenparameter P1,P2,PMS werden durch ein kleines Rechteck innerhalb oder in unmittelbarer Umgebung der Komponente dargestellt.

Eine Meldung ohne Nutzdatenparameter P1,P2,PMS einer der Endeinrichtungen wird mit M bezeichnet, eine Meldung mit Nutzdatenparametern P1 der ersten Endeinrichtung mit M1, eine Meldung mit Nutzdatenparametern P2 der zweiten Endeinrichtung mit M2, eine Meldung mit Nutzdatenparametern PMS des Medien-Servers mit MMS. In Kommunikationsprotokollen üblicherweise vorhandene Quittungsmeldungen zur Bestätigung einer empfangenen Meldung sind in den Figuren nicht dargestellt, außer wenn die Quittungsmeldung zur Übermittlung von Nutzdatenparametern P1,P2,PMS verwendet wird. Weiterhin sind Meldungen, die zeitlich hintereinander geschickt werden häufig in einer Figur dargestellt, sofern diese Meldungen direkt oder indirekt vom selben Ereignis abhängen.

Für das vorliegende Ausführungsbeispiel sei angenommen, dass die Kommunikationseinrichtung KE1 so konfiguriert ist, dass eine Verbindungsanfrage von einer paketorientierten Endeinrichtung aus dem durch die Kommunikationseinrichtung KE1 verwalteten Subnetzwerk zu einer gerufenen Endeinrichtung außerhalb dieses Subnetzwerks, vom Gateway VS1 zum Gateway VSA übermittelt wird. Im Gateway VSA wird geprüft, ob sich die gerufene Endeinrichtung in dessen verwalteten Subnetzwerk befindet. Falls nicht, wird die Verbindungsanfrage an den Gateway VSB weitergeleitet. Dort findet eine analoge Prüfung statt. Wenn sich die gerufene Endeinrichtung auch nicht im vom Gateway VSB verwalteten Subnetzwerk befindet, wird die Verbindungsanfrage zum Gateway VS2 weitergeleitet. Im Ausführungsbeispiel sei die gerufene Endeinrichtung im vom Gateway VS2 verwalteten paketorientierten Subnetzwerk. Somit kann der Gateway VS2 Pakete und Meldungen, die für die gerufene Endeinrichtung bestimmt sind, an diese übermitteln.

Das Weiterleiten der Verbindungsanfrage von einem Gateway zu einem anderen Gateway kann dabei insbesondere anhand einer Teilanalyse einer bei der Verbindungsanfrage verwendeten Adresse der zweiten Endeinrichtung EG2 durchgeführt werden.

Weiterhin soll im Ausführungsbeispiel die Möglichkeit bestehen, dass die Endeinrichtungen EG1, EG2 und die Gateways VS1, VS2, VSA, VSB direkt über das paketorientierte Netzwerk PON kommunizieren können, sofern die genannten Komponenten eine Adresse eines jeweiligen Kommunikationspartners kennen und ihn somit direkt adressieren können.

Darüber hinaus sei angenommen, dass die erste Endeinrichtung EG1 und der erste Gateway GW1 das SIP-Protokoll mit "Sipping-Early-Media"- und "Sipping-Early-Disposition"-Erweiterungen gemäß IETF unterstützen. Die Verbindung zwischen dem ersten Gateway VS1 und dem weiteren Gateway VSA, dem weiteren Gateway VSB und dem zweiten Gateway VS2, sowie dem zweiten Gateway VS2 und der zweiten Endeinrichtung EG2 sei über Standard-SIP-Methoden möglich. Die Verbindung zwischen den weiteren Gateways VSA und VSB sei über ein proprietäres, leitungsvermitteltes Protokoll möglich, wobei in einem proprietären Signalisierungsprotokoll zwischen den weiteren Gateways VSA,VSB die Möglichkeit bestehen soll, Nutzdatenparameter von Endeinrichtungen zu übermitteln.

In Figur 1 ist die Initiierung des Verbindungsaufbaus durch die ersten Endeinrichtung EG1 schematisch dargestellt. Insbesondere durch Wählen einer Rufnummer der zweiten Endeinrichtung EG2 initiiert die erste Endeinrichtung EG1 im Rahmen der Signalisierungsverbindung SIG eine Verbindungsaufbausignalisierung zum ersten Gateway VS1. In dieser Signalisierung wird die Meldung M1 mit Nutzdatenparametern P1 der ersten Endeinrichtung an den ersten Gateway VS1 übermittelt.

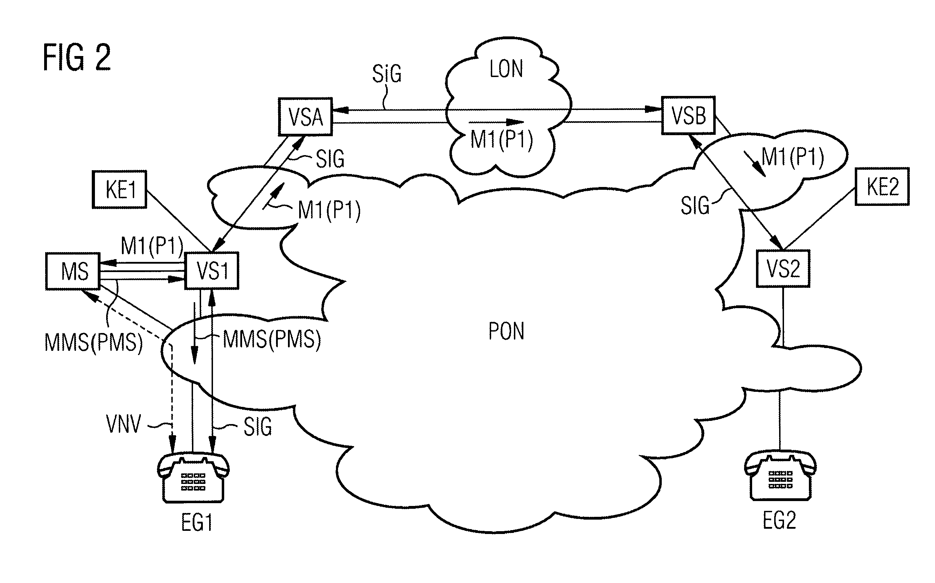

Der erste Gateway VS1 erkennt z.B. an konfigurierten Regeln im Gateway VS1 bzw. in der Kommunikationseinrichtung KE1, dass die Verbindungsaufbausignalisierung im Rahmen der Signalisierungsverbindung SIG zum weiteren Gateway VSA aufgebaut werden soll und dass parallel eine Vorab-Nutzdatenverbindung VNV - auch Early-Media-Verbindung genannt - zum Medien-Server MS aufgebaut werden soll. In Figur 2 ist schematisch dargestellt, dass die erste Endeinrichtung EG1 ihre Nutzdatenparameter, als für die erste Endeinrichtung EG1 spezifische, erste Nutzdatenparameter P1, für die aufzubauende Vorab-Nutzdatenverbindung VNV in der Signalisierungsmeldung M1 an den ersten Gateway VS1 übermittelt und diese ersten Nutzdatenparameter P1 von dort an den Medien-Server MS weitergeleitet werden. Der Medien-Server MS übermittelt infolgedessen seine Nutzdatenparameter PMS in der Signalisierungsmeldung MMS an die ersten Endeinrichtung EG1. Dies kann über den ersten Gateway VS1 oder durch eine direkte Verbindung geschehen. Somit kann die Vorab-Nutzdatenverbindung VNV unter Verwendung der übermittelten Nutzdatenparametern P1,PMS zwischen den Medien-Server MS und der ersten Endeinrichtung EG1 aufgebaut werden. Ein Service dieser Vorab-Nutzdatenverbindung VNV können z.B. Ansagen sein, die an die ersten Endeinrichtung EG1 übermittelt werden. Weiterhin kann der Medien-Server MS auf Tastendrücke an der ersten Endeinrichtung EG1 reagieren, indem er beispielsweise bei Drücken der "#"-Taste einen Abbruch des Verbindungsaufbaus zur zweiten Endeinrichtung EG2 bewirkt und die erste Endeinrichtung EG1 mit einem Operator oder einem Sprachinfoservers bzw. einer Anrufbeantworter-Funktion verbindet.

Während des Aufbaus und während des Bestehens der Vorab-Nutzdatenverbindung VNV zum Medien-Server MS wird die Verbindungsaufbausignalisierung mit der Meldung M1 mit den ersten Nutzdatenparametern P1 an den weiteren Gateway VSA übermittelt. Infolgedessen wird die Verbindungsaufbausignalisierung zwischen den weiteren Gateways VSA und VSB aufgebaut, in der die ersten Nutzdatenparameter in der Meldung M1 zum weiteren Gateway VSB übermittelt werden. Daraufhin baut der weitere Gateway VSB die Verbindungsaufbausignalisierung zum zweiten Gateway VS2 auf und übermittelt die Meldung M1 mit den ersten Nutzdatenparametern P1.

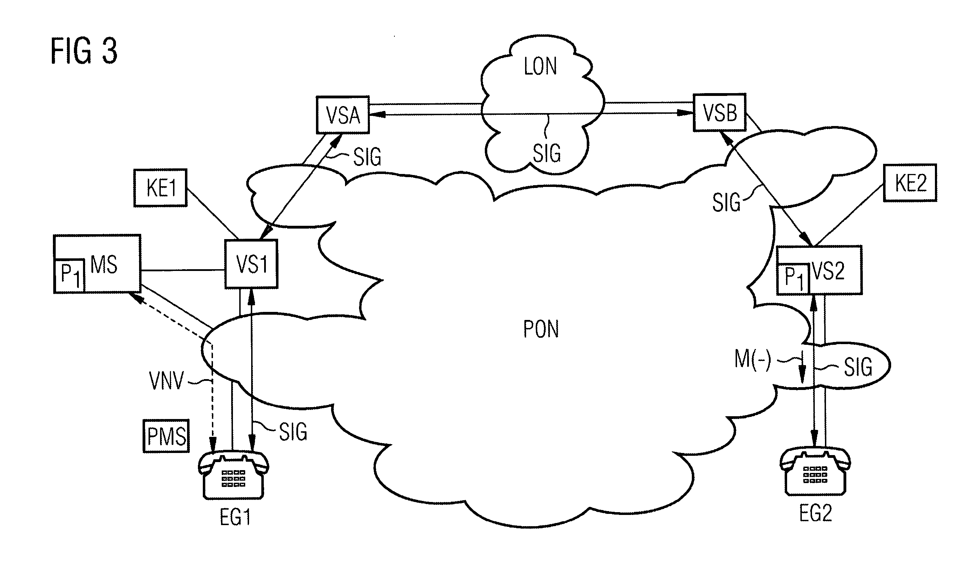

Infolge der empfangenen Verbindungsaufbausignalisierung wird vom zweiten Gateway VS2 eine Verbindungsaufbaumeldung M ohne die ersten Nutzdatenparameter P1 zur zweiten Endeinrichtung EG2 übermittelt - dargestellt in Figur 3. Die ersten Nutzdatenparameter P1 werden dabei im zweiten Gateway VS2 zurückgehalten. Weiterhin speichert der zweite Gateway VS2 die empfangenen ersten Nutzdatenparameter P1 in einem Speicher des zweiten Gateway VS2. Da die zweite Endeinrichtung EG2 die ersten Nutzdatenparameter P1 in dieser Verfahrensphase noch nicht erhalten hat, wird von der zweiten Endeinrichtung EG2 noch keine direkte Nutzdatenverbindung zur ersten Endeinrichtung EG1 aufgebaut. Infolge des Eintreffens der Verbindungsaufbaumeldung M zeigt die zweite Endeinrichtung EG2 eine eingehende Verbindung einem Benutzer der zweiten Endeinrichtung EG2 an, indem sie z.B. einen akustischen Klingelton ausgibt und/oder eine optische Ausgabe an einem Display, über eine LED und/oder über eine grafische Benutzeroberfläche durchführt.

Weiterhin ist in Figur 3 veranschaulicht, dass der Medien-Server MS die ersten Nutzdatenparameter P1 für die Vorab-Nutzdatenverbindung VNV gespeichert hat, und dass die erste Endeinrichtung EG1 die Nutzdatenparameter PMS des Medien-Servers MS gespeichert hat.

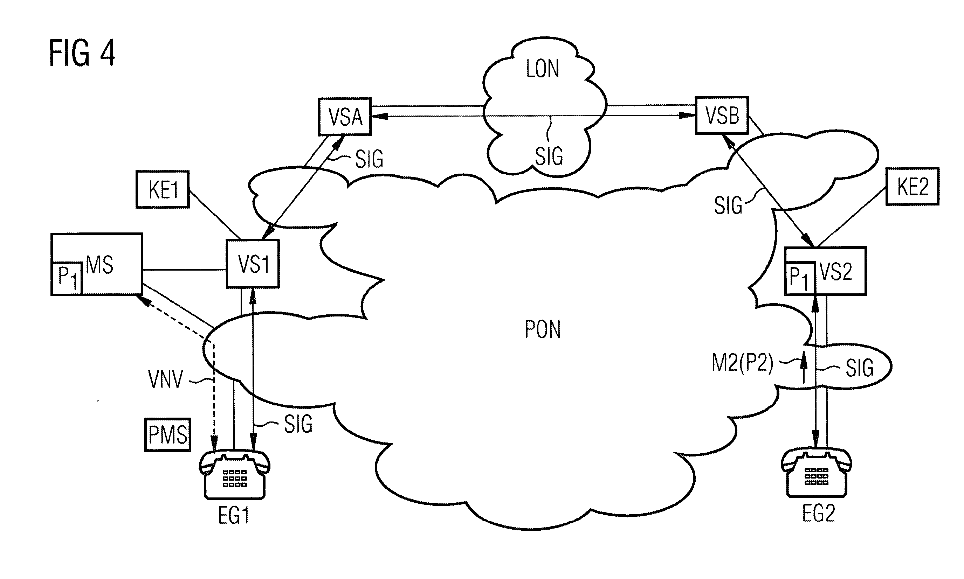

In Figur 4 ist schematisch dargestellt, dass die zweite Endeinrichtung EG2 infolge eines Eintreffens der Verbindungsaufbaumeldung M ihre, für die zweite Endeinrichtung EG2 spezifischen, zweiten Nutzdatenparameter P2 zum zweiten Gateway VS2 in der Meldung M2 übermittelt. Dies kann z.B. in einer Quittung der Verbindungsaufbaumeldung M geschehen.

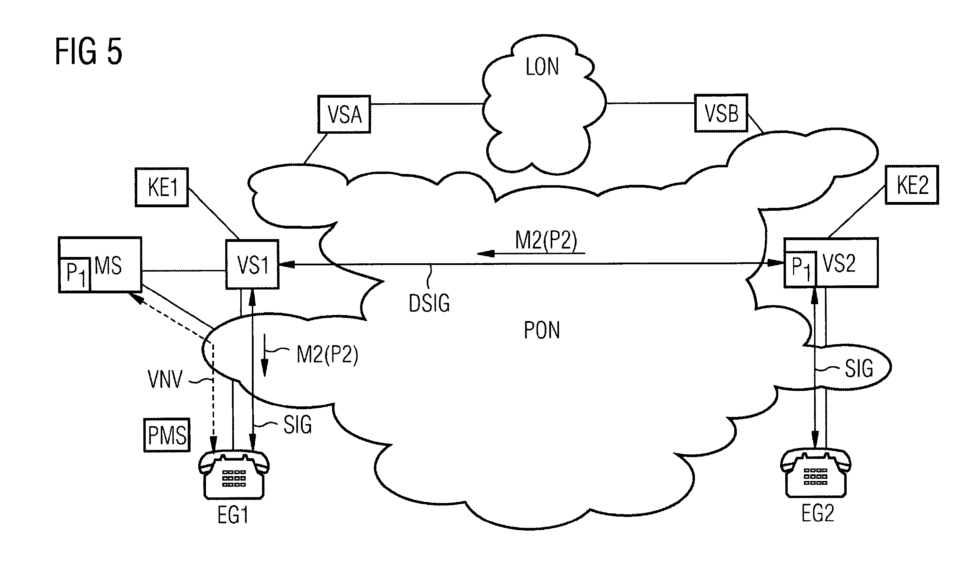

Figur 5 veranschaulicht einen Ersatz oder eine Erweiterung der Signalisierungsverbindung SIG durch eine direkte Signalisierungsverbindung DSIG. Dem zweiten Gateway VS2 ist zumindest eines der an der ursprünglichen Signalisierungsverbindung SIG beteiligten Gateways VS1, VSA, VSB - z.B. aufgrund der in Figur 2 dargestellten Signalisierung - bekannt. Damit kann der zweite Gateway VS2 die direkte Signalisierungsverbindung DSIG zum ersten Gateway VS1 unter Umgehung der weiteren Gateways VSA, VSB aufbauen. Über diese direkte Signalisierungsverbindung DSIG wird dann eine Meldung M2 mit den zweiten Nutzdatenparametern P2 übermittelt. Infolgedessen werden von dem ersten Gateway VS1 die zweiten Nutzdatenparameter P2 in einer Meldung M2 zur ersten Endeinrichtung EG1 übermittelt.

Nicht dargestellt, könnten alternativ die zweiten Nutzdatenparameter P2 auch im ersten Gateway VS1 gespeichert werden und erst später an die erste Endeinrichtung EG1 übermittelt werden. Das kann z.B. davon abhängen, welche SIP-Methoden die erste Endeinrichtung EG1 für die Übermittlung von Nutzdatenparametern unterstützt.

Alternativ zur direkten Signalisierungsverbindung DSIG könnten die zweiten Nutzdatenparameter P2 über die ursprüngliche Signalisierungsverbindung SIG vom zweiten Gateway VS2, über die weiteren Gateways VSB und VSA zum ersten Gateway VS1 übermittelt werden (nicht dargestellt).

Durch den Aufbau der direkten Signalisierungsverbindung DSIG zwischen dem zweiten Gateway VS2 und dem ersten Gateway VS1 könnten weiterhin die Signalisierungsverbindung SIG zwischen dem zweiten Gateway VS2 und dem weiteren Gateway VSB, zwischen dem weiteren Gateway VSB und dem weiteren Gateway VSA und zwischen dem weiteren Gateway VSA und dem ersten Gateway VS1 abgebaut werden. Alternativ kann diese Signalisierungsverbindung SIG weiter bestehen bleiben. Da diese Signalisierungsverbindung SIG zwischen dem ersten Gateway VS1, den weiteren Gateways VSA und VSB und dem zweiten Gateway VS2 im Folgenden nicht relevant ist, wird sie in Figur 5 und den folgenden Figuren nicht weiter dargestellt.

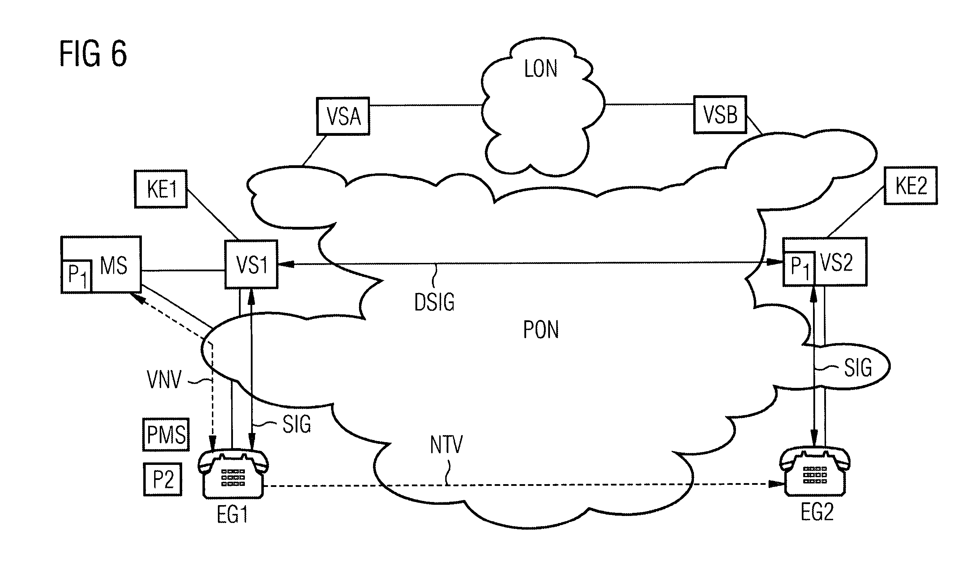

Infolge eines Eintreffens der zweiten Nutzdatenparameter P2 bei der ersten Endeinrichtung EG1 wird, wie in Figur 6 dargestellt, eine Nutzdatenteilverbindung NTV von der ersten Endeinrichtung EG1 zur zweiten Endeinrichtung EG2 unter Umgehung der Gateways VS1,VS2,VSA,VSB aufgebaut. Diese ist eine unidirektionale, gerichtete Verbindung ausgehend von der ersten Endeinrichtung EG1 zur zweiten Endeinrichtung EG2. Diese Nutzdatenteilverbindung NTV ist somit bereits vor Verbindungsannahme durch die zweite Endeinrichtung EG2 aufgebaut. Dies ist insofern vorteilhaft, als dass nach der Verbindungsannahme durch die zweite Endeinrichtung EG2 eine bidirektionale Nutzdatenverbindung ohne große Verzögerung verwendet werden kann ohne erst langwierig eine Nutzdatenteilverbindung NTV aufbauen zu müssen.

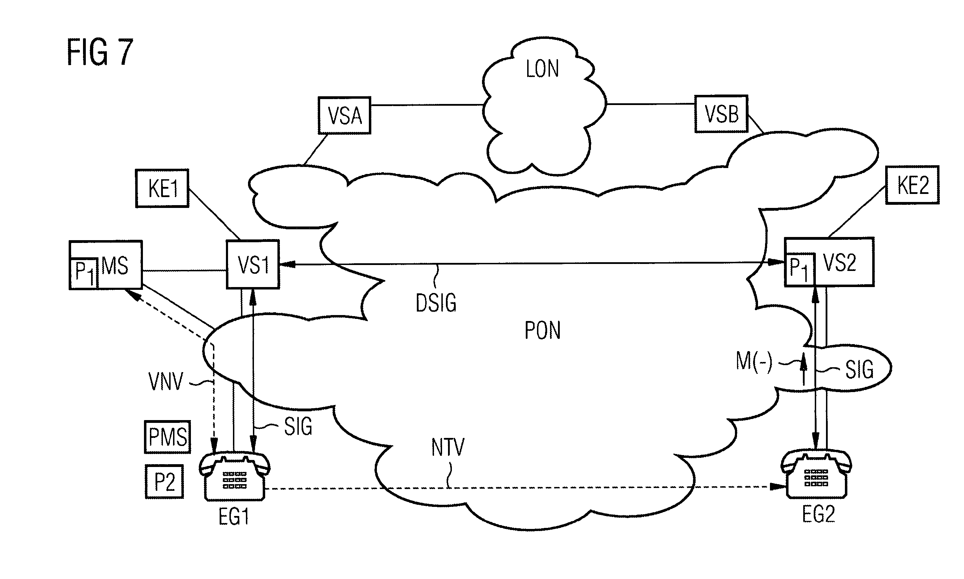

Bei Verbindungsannahme durch die zweite Endeinrichtung EG2 - insbesondere durch Abheben eines Telefonhörers oder Drücken einer Taste - wird eine Verbindungsannahmemeldung M ohne Nutzdatenparameter P2 der zweiten Endeinrichtung EG2 von der zweiten Endeinrichtung EG2 zur zweiten Verbindungssteuerung VS2 übermittelt - dargestellt in Figur 7.

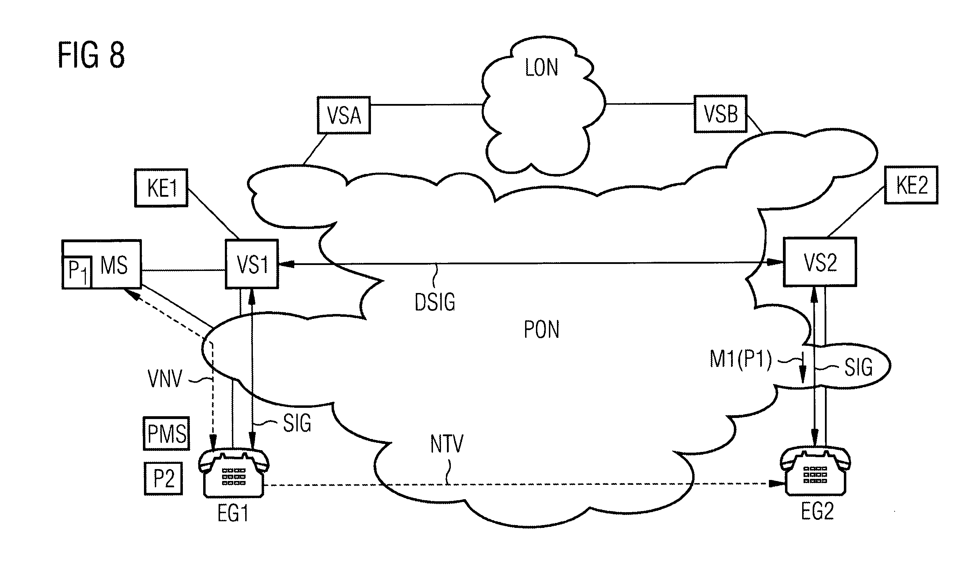

Infolgedessen werden, wie in Figur 8 dargestellt, die vorher gespeicherten ersten Nutzdatenparameter P1 zur zweiten Endeinrichtung EG2 in einer Meldung M1 mit den ersten Nutzdatenparametern P1 vom Gateway VS2 übermittelt. Diese Meldung M1 kann insbesondere eine Quittung zur Verbindungsannahmemeldung M sein. Dadurch, dass die ersten Nutzdatenparameter P1 vom zweiten Gateway VS2 und somit vom direktem Kommunikationspartner der zweiten Endeinrichtung EG2 übermittelt werden, ist die Verzögerung zwischen der Verbindungsannahme und einem Eintreffen der ersten Nutzdatenparameter P1 bei der zweiten Endeinrichtung EG2 sehr gering.

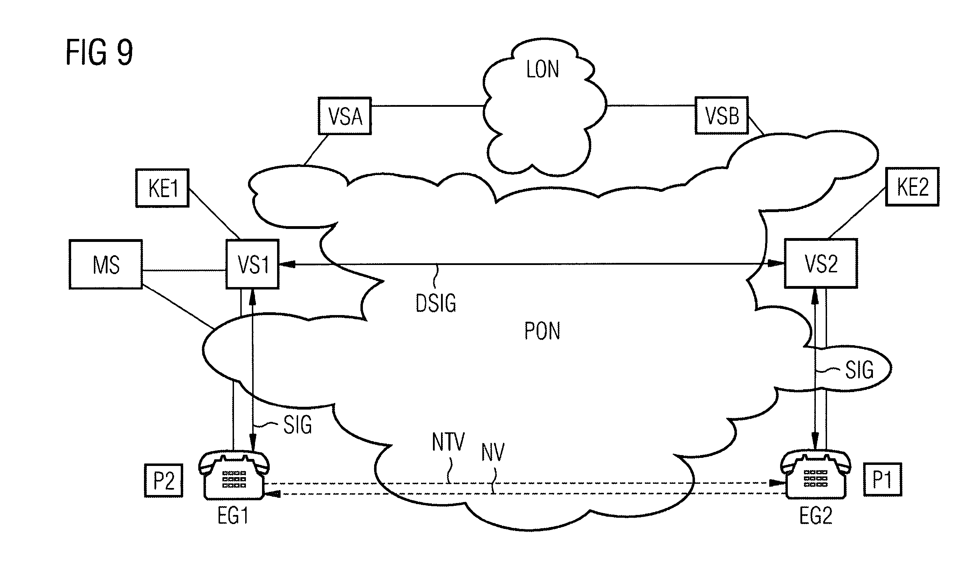

In Figur 9 wird infolge des Eintreffens der ersten Nutzdatenparameter P1 bei der zweiten Endeinrichtung EG2 eine direkte, z.B. unidirektionale, Nutzdatenverbindung NV von der zweiten Endeinrichtung EG2 zur ersten Endeinrichtung EG1 unter Umgehung der Gateways VS1,VS2,VSA,VSB aufgebaut. Somit ist nun eine bidirektionale, direkte Kommunikation zwischen den beiden Endeinrichtungen EG1 und EG2 möglich. Aufgrund des Aufbaus der Nutzdatenverbindung NV wird weiterhin die Vorab-Nutzdatenverbindung VNV abgebaut. Dafür evtl. benötigte Meldungen sind dabei in der Figur nicht dargestellt.

Bei diesem Verfahren ist insbesondere vorteilhaft, dass aufgrund der direkten Kommunikation Verzögerungen in den Verbindungssteuerungen und Verschlechterungen der Sprachqualität aufgrund von mehrmaligem Umkodieren der Nutzdaten vermieden werden können. Weiterhin ist vorteilhaft, dass eine direkte Nutzdatenverbindung zwischen SIP-Endeinrichtungen durchgeführt werden kann.

Im Ausführungsbeispiel unterstützt die erste Endeinrichtung EG1 das SIP-Protokoll mit "Sipping-Early-Media"- und "Sipping-Early-Disposition"-Erweiterungen. Dies ist insofern vorteilhaft, als dass diese Erweiterungen für die Einbeziehung einer Vorab-Nutzdatenverbindung, hier VNV, vorgesehen sind.

Im Folgenden werden einige alternative Ausprägungen dargestellt, die nicht in den Figuren dargestellt sind.

In einer ersten alternativen Ausführungsvariante können die Gateways VS1,VS2,VSA,VSB das H.323-Protokoll für die Signalisierung zwischen den beteiligten Gateways verwenden. Weiterhin kann die zweite Endeinrichtung EG2 den Direct-Media-Connection-Standard H.323/DMC unterstützen. Dadurch kann die zweite Endeinrichtung EG2 infolge eines Eintreffens der Verbindungsaufbaumeldung die zweiten Nutzdatenparameter P2 direkt zur ersten Verbindungssteuerung VS1 mittels H.323 übermitteln, unter Umgehung der zweiten und der weiteren Verbindungssteuerungen VS2, VSA, VSB. Weiterhin kann damit eine direkte Nutzdatenverbindung zwischen einer ersten, den SIP-Standard befolgenden Endeinrichtung EG1 und einer zweiten, den H.323/DMC-Standard befolgenden Endeinrichtung EG2 aufgebaut werden.

In einer zweiten Ausführungsvariante unterstützt die Verbindung zwischen den weiteren Gateways VSA und VSB keine Nutzdatenparameter-Übermittelung. In diesem Fall können im Rahmen der Signalisierungsverbindung SIG die ersten Nutzdatenparameter P1 anstatt im zweiten Gateway VS2 im ersten Gateway VS1 gespeichert werden. Die Signalisierungsverbindung SIG vom ersten Gateway VS1 über die weiteren Gateways VSA und VSB zum zweiten Gateway VS2 findet wie in Figur 2 dargestellt statt, nur dass die ersten Nutzdatenparameter P1 nicht zu den vorgenannten Gateways transportiert werden. Erst nachdem die zweiten Nutzdatenparameter P2 durch die direkte Signalisierungsverbindung DSIG vom zweiten Gateway VS2 zum ersten Gateway VS1 übermittelt werden, werden in einer Quittung die gespeicherten ersten Nutzdatenparameter P1 vom ersten Gateway VS1 zum zweiten Gateway VS2 übermittelt und dort gespeichert. Die nun folgenden Schritte zum Aufbau der Nutzdatenverbindung können dann mit obiger Beschreibung für Figur 6 und folgende übereinstimmen. Vorteilhaft ist dieses Verfahren insbesondere dadurch, dass die weiteren Gateways VSA und VSB nicht zwingend Meldungen mit ersten und zweiten Nutzdatenparametern P1,P2 verschicken und empfangen können müssen.

In einer dritten Ausführungsvariante unterstützt die ersten Endeinrichtung EG1 die SIP-Update-Methode gemäß RFC3311. Eine Unterstützung der Entwürfe "Sipping-Early-Media" bzw. "Sipping-Early-Disposition" ist nicht erforderlich. Hierbei werden wie in Figur 1-5 dargestellt die ersten Nutzdatenparameter P1 zur zweiten Verbindungssteuerung VS2 übermittelt und dort gespeichert. Die zweiten Nutzdatenparameter P2 werden über eine direkte Signalisierungsverbindung SIG vom zweiten Gateway VS2 zum ersten Gateway VS1 und von dort weiter zur ersten Endeinrichtung EG1 übermittelt. Dabei wird für die Übermittlung der zweiten Nutzdatenparameter P2 zur ersten Endeinrichtung EG1 eine SIP-Update-Methode verwendet. In der zugehörigen Quittung werden neue, für die erste Endeinrichtung EG1 spezifische, dritte Nutzdatenparameter von der ersten Endeinrichtung EG1 zum ersten Gateway VS1 übermittelt, da die ersten Nutzdatenparameter P1 nur für die Vorab-Nutzdatenverbindung VNV gültig sind. Infolgedessen werden die dritten Nutzdatenparameter vom ersten Gateway VS1 in einer Meldung zum zweiten Gateway VS2 übermittelt. Dort werden die dritten Nutzdatenparameter gespeichert, bis sie infolge der Verbindungsannahme der zweiten Endeinrichtung EG2 zu dieser übermittelt werden.

In einer vierten Ausführungsvariante unterstützt die ersten Endeinrichtung EG1 die SIP-Re-Invite-Methode. Wie in den Figuren 1-5 dargestellt, werden die ersten Nutzdatenparameter P1 der zweiten Verbindungssteuerung VS2 übermittelt und dort gespeichert und die zweiten Nutzdatenparameter P2 über eine direkte Signalisierungsverbindung DSIG vom zweiten Gateway VS2 zum ersten Gateway VS1 übermittelt und dort gespeichert. Bei Verbindungsannahme durch die zweite Endeinrichtung EG2 werden die gespeicherten zweiten Nutzdatenparameter P2 vom ersten Gateway VS1 zur ersten Endeinrichtung EG1 mittels der SIP-Re-Invite-Methode übertragen. Eine Verbindungsannahmequittung vom zweiten Gateway VS2 zur zweiten Endeinrichtung EG2 wird noch nicht gesendet, sondern zurückgehalten. Nach Eintreffen der zweiten Nutzdatenparameter P2 bei der ersten Endeinrichtung EG1 sendet diese neue, für die erste Endeinrichtung EG1 spezifische, dritte Nutzdatenparameter von der ersten Endeinrichtung EG1 zum ersten Gateway VS1 und von dort weiter, über die direkte Signalisierungsverbindung DSIG, zum zweiten Gateway VS2. Vom zweiten Gateway VS2 werden die dritten Nutzdatenparameter nun in der bis zu diesem Zeitpunkt zurückgehaltenen Verbindungsannahmequittung an die zweite Endeinrichtung EG2 übermittelt.

In einer fünften Ausführungsvariante verwendet die erste Endeinrichtung EG1 Standard-SIP-Methoden gemäß RFC3261 zur Signalisierung. Wie in den Figuren 1-3 dargestellt, werden die ersten Nutzdatenparameter P1 der zweiten Verbindungssteuerung VS2 übermittelt. Von dort werden sie in einer Meldung, bevorzugt die SIP-Re-Invite-Meldung zur zweiten Endeinrichtung EG2 übermittelt. Eine Quittungsmeldung von den ersten Verbindungssteuerung VS1 zu der ersten Endeinrichtung EG1 wird dabei zunächst zurückgehalten. Eine gerichtete Nutzdatenverbindung NV von der zweiten Endeinrichtung EG2 zur ersten Endeinrichtung EG1 wird infolgedessen aufgebaut. Weiterhin wird dem Benutzer eine eingehende Verbindung akustisch und/oder optisch angezeigt. Darüberhinaus werden infolge des Eintreffens der ersten Nutzdatenparameter P1 bei der zweiten Endeinrichtung EG2 die zweiten Nutzdatenparameter P2 zur zweiten Verbindungssteuerung VS2 übermittelt, von dort zur weiteren Vermittlungssteuerung VSB und von dort weiter zur weiteren Vermittlungssteuerung VSA. Die zweiten Nutzdatenparameter P2 werden von der weiteren Vermittlungssteuerung VSA zur ersten Vermittlungssteuerung VS1 übermittelt und von dort durch eine SIP-Quittungsmeldung mit einer der Meldungsnummern 180, 183 oder 200 zur ersten Endeinrichtung EG1. Eine gerichtete, direkte Nutzdatenteilverbindung NTV von der ersten Endeinrichtung EG1 zur zweiten Endeinrichtung EG2 wird infolgedessen aufgebaut, wobei empfangene Nutzdatenpakete bei der zweiten Endeinrichtung EG2 verworfen werden, da diese die Verbindung noch nicht angenommen hat. Bei Verbindungsannahme durch die zweite Endeinrichtung EG2 ist dann unmittelbar eine direkte, bidirektionale Nutzdatenkommunikation möglich.

Die sechste Ausführungsvariante des Verfahrens ist eine Variation der fünften Ausprägung, bei der bei Übermittlung der zweiten Nutzdatenparameter P2 zur ersten Verbindungssteuerung VS1 und im weiteren Verlauf eine direkte Signalisierungsverbindung DSIG zwischen der zweiten Verbindungssteuerung VS2 und der ersten Verbindungssteuerung VS1 aufgebaut wird. Über direkte Signalisierungsverbindung DSIG werden die Nutzdatenparameter mittels der oben genannten SIP-Quittungsmeldungen übertragen.

In einer siebten Ausführungsvariante können, basierend auf die fünfte und/oder sechste Ausprägung des Verfahrens, die Gateways VS1,VS2,VSA,VSB das H.323-Protokoll für die Signalisierung zwischen den beteiligten Gateways verwenden. Weiterhin kann die zweite Endeinrichtung EG2 den Direct-Media-Connection-Standard H.323/DMC unterstützen. Dadurch kann die zweite Endeinrichtung EG2 infolge eines Eintreffens der Verbindungsaufbaumeldung die zweiten Nutzdatenparameter P2 direkt zur ersten Verbindungssteuerung VS1 übermitteln, unter Umgehung der zweiten und der weiteren Verbindungssteuerungen VS2, VSA, VSB. Weiterhin wird damit eine direkte Nutzdatenverbindung zwischen einer ersten, den SIP-Standard befolgenden Endeinrichtung und einer zweiten, den H.323/DMC-Standard befolgenden Endeinrichtung möglich.

In einer achten Ausführungsvariante, basierend auf die fünfte und/oder sechste Ausprägung des Verfahrens, unterstützt die Verbindung zwischen den weiteren Gateways VSA und VSB keine Nutzdatenparameter-Übermittelung. Somit werden im Rahmen der Signalisierungsverbindung SIG die ersten Nutzdatenparameter P1 anstatt im zweiten Gateway VS2 im ersten Gateway VS1 gespeichert. Die Signalisierungsverbindung SIG vom ersten Gateway VS1 über die weiteren Gateways VSA und VSB zum zweiten Gateway VS2 findet wie in Figur 2 dargestellt statt, nur dass die ersten Nutzdatenparameter P1 nicht in den Meldungen zu den vorgenannten Gateways transportiert werden. Erst nachdem die zweiten Nutzdatenparameter P2 via den genannten SIP-Quittungsmeldungen durch die direkte Signalisierungsverbindung DSIG vom zweiten Gateway VS2 zum ersten Gateway VS1 übermittelt werden, werden in einer der SIP-Quittungsmeldungen die gespeicherten ersten Nutzdatenparameter P1 vom ersten Gateway VS1 zum zweiten Gateway VS2 übermittelt und dort gespeichert. Die nun folgenden Schritte zum Aufbau der Nutzdatenverbindung NV können dann mit obiger Beschreibung für Figur 6 und folgende übereinstimmen. Vorteilhaft ist dieses Verfahren insbesondere dadurch, dass die weiteren Gateways nicht zwingend Meldungen mit ersten und zweiten Nutzdatenparametern P1,P2 verschicken und empfangen können müssen.

## Patentansprüche

1. Verfahren zum Aufbauen einer Nutzdatenverbindung (NV) zwischen einer ersten, an eine erste Verbindungssteuerung (VS1) gekoppelte Endeinrichtung (EG1) und einer zweiten, an eine zweite Verbindungssteuerung (VS2) gekoppelte Endeinrichtung (EG2), **dadurch gekennzeichnet, dass**
a. von der ersten Endeinrichtung (EG1) eine Verbindungsaufbausignalisierung zur zweiten Verbindungssteuerung (VS2) initiiert wird, in deren Rahmen für die erste Endeinrichtung (EG1) spezifische, erste Nutzdatenparameter (P1) zu einer der Verbindungssteuerungen (VS1,VS2) übermittelt werden,
b. infolge der Verbindungsaufbausignalisierung von der zweiten Verbindungssteuerung (VS2) eine Verbindungsaufbaumeldung ohne die ersten Nutzdatenparameter (P1) zur zweiten Endeinrichtung (EG2) übermittelt wird,
c. bei Verbindungsannahme durch die zweite Endeinrichtung (EG2) eine Verbindungsannahmemeldung von der zweiten Endeinrichtung (EG2) zu einer der Verbindungssteuerungen (VS1,VS2) übermittelt wird, und infolgedessen die ersten Nutzdatenparameter (P1) zur zweiten Endeinrichtung (EG2) übermittelt werden, und
d. infolge eines Eintreffens der ersten Nutzdatenparameter (P1) bei der zweiten Endeinrichtung (EG2) die Nutzdatenverbindung (NV) von der zweiten Endeinrichtung (EG2) zur ersten Endeinrichtung (EG1) aufgebaut wird.

2. Verfahren nach Anspruch 1,
**dadurch gekennzeichnet, dass**
a. infolge eines Eintreffens der Verbindungsaufbaumeldung für die zweite Endeinrichtung (EG2) spezifische, zweite Nutzdatenparameter (P2) von der zweiten Endeinrichtung (EG2) zur ersten Endeinrichtung (EG1) übermittelt werden, und
b. infolge eines Eintreffens der zweiten Nutzdatenparameter (P2) bei der ersten Endeinrichtung (EG1) eine Nutzdatenteilverbindung (NTV) von der ersten Endeinrichtung (EG1) zur zweiten Endeinrichtung (EG2) aufgebaut wird.

3. Verfahren nach einem der vorhergehenden Ansprüche,
**dadurch gekennzeichnet,**
**dass** die Nutzdatenverbindung (NV) und/oder die Nutzdatenteilverbindung (NTV) unter Umgehung mindestens einer der Verbindungssteuerungen (VS1,VS2) aufgebaut werden.

4. Verfahren nach einem der vorhergehenden Ansprüche,
**dadurch gekennzeichnet,**
**dass** die erste und die zweite Verbindungssteuerung miteinander identisch sind.

5. Verfahren nach einem der Ansprüche 1 bis 3,
**dadurch gekennzeichnet,**
**dass**
- die erste und die zweite Verbindungssteuerung (VS1,VS2) über eine weitere Verbindungssteuerung (VSA,VSB) gekoppelt sind,
- im Rahmen der Verbindungsaufbausignalisierung zumindest
a. die erste Verbindungssteuerung (VS1) die ersten Nutzdatenparameter (P1) an die weitere Verbindungssteuerung (VSA,VSB) übermittelt oder
b. die weitere Verbindungssteuerung (VSA,VSB) die ersten Nutzdatenparameter (P1) zur zweiten Verbindungssteuerung (VS2) übermittelt.

6. Verfahren nach Anspruch 5,
**dadurch gekennzeichnet,**
**dass** Nutzdatenparameter, Meldungen im Rahmen der Verbindungsaufbausignalisierung und/oder die Verbindungsannahmemeldung zwischen der ersten und der zweiten Verbindungssteuerung (VS1,VS2) über die weitere Verbindungssteuerung (VSA,VSB) übermittelt werden oder dass weitere Nutzdatenparameter, Meldungen im Rahmen der Verbindungsaufbausignalisierung und/oder die Verbindungsannahmemeldung zwischen der ersten und der zweiten Verbindungssteuerung (VS1,VS2) unter Umgehung der weiteren Verbindungssteuerung (VSA,VSB) übermittelt werden.

7. Verfahren nach einem der Ansprüche 5 oder 6,
**dadurch gekennzeichnet,**
**dass** im Rahmen der Verbindungsaufbausignalisierung mindestens eine Meldung mit den zweiten Nutzdatenparametern (P2) zwischen der zweiten Endeinrichtung (EG2) und der ersten Verbindungssteuerung (VS1) unter Umgehung der zweiten und der weiteren Verbindungssteuerung (VS2,VSA,VSB) übermittelt wird.

8. Verfahren nach einem der vorhergehenden Ansprüche,
**dadurch gekennzeichnet,**
**dass** im Rahmen der Verbindungsaufbausignalisierung
- die erste Verbindungssteuerung (VS1) die ersten Nutzdatenparameter (P1) zur zweiten Verbindungssteuerung (VS2) übermittelt oder
- die erste Verbindungssteuerung (VS1) eine Meldung ohne die zweiten Nutzdatenparameter (P2) zur zweiten Verbindungssteuerung (VS2) übermittelt.

9. Verfahren nach einem der vorhergehenden Ansprüche,
**dadurch gekennzeichnet,**
**dass**
- ein Medien-Server (MS) mit einer der Verbindungssteuerungen (VS1,VS2,VSA,VSB) gekoppelt ist, und
- im Rahmen der Verbindungsaufbausignalisierung eine Vorab-Nutzdatenverbindung (VNV) zwischen dem Medien-Server (MS) und der ersten Endeinrichtung (EG1) aufgebaut wird.

10. Verfahren nach einem der vorhergehenden Ansprüche,
**dadurch gekennzeichnet,**
**dass** infolge des Eintreffens einer im Rahmen der Verbindungsaufbausignalisierung übermittelten Meldung oder der ersten Nutzdatenparameter (P1) bei der zweiten Endeinrichtung (EG2) die zweite Endeinrichtung (EG2) eine eingehende Verbindung anzeigt.

11. Verfahren nach einem der vorhergehenden Ansprüche,
**dadurch gekennzeichnet,**
**dass** infolge der Verbindungsannahme durch die zweite Endeinrichtung (EG2) von der zweiten Verbindungssteuerung (VS2) eine Verbindungsannahmequittung mit den ersten Nutzdatenparametern (P1) zur zweiten Endeinrichtung (EG2) übermittelt werden.

12. Verfahren nach einem der vorhergehenden Ansprüche soweit abhängig von Anspruch 9,
**dadurch gekennzeichnet,**
**dass** im Rahmen des Aufbaus einer der Nutzdatenverbindung (NV) oder der Nutzdatenteilverbindung (NTV) oder im Rahmen der Verbindungsaufbausignalisierung die Vorab-Nutzdatenverbindung (VNV) abgebaut wird.

13. Verfahren nach einem der vorhergehenden Ansprüche,
**dadurch gekennzeichnet,**
**dass** infolge eines Empfangs der Verbindungsannahmemeldung die ersten Nutzdatenparameter (P1) von der empfangenden Verbindungssteuerung (VS1,VS2,VSA,VSB) an die zweite Endeinrichtung (EG2) übermittelt werden.

14. Verfahren nach einem der vorhergehenden Ansprüche,
**dadurch gekennzeichnet,**
**dass** infolge eines Eintreffens der zweiten Nutzdatenparameter (P2) bei der ersten Endeinrichtung (EG1) die ersten Nutzdatenparameter (P1) zur zweiten Verbindungssteuerung (VS2) übermittelt werden.

15. Verfahren nach einem der vorhergehenden Ansprüche,
**dadurch gekennzeichnet,**
**dass** im Rahmen der Verbindungsaufbausignalisierung infolge eines Eintreffens der zweiten Nutzdatenparameter (P2) bei der ersten Verbindungssteuerung (VS1) eine Meldung ohne die zweiten Nutzdatenparameter (P2) an die erste Endeinrichtung (EG1) übermittelt wird.

16. Verfahren nach einem der vorhergehenden Ansprüche,
**dadurch gekennzeichnet,**
**dass** infolge der Verbindungsannahme durch die zweite Endeinrichtung von der ersten Verbindungssteuerung (VS1) die zweiten Nutzdatenparameter (P2) an die erste Endeinrichtung (EG1) übermittelt werden.

17. Verfahren nach einem der vorhergehenden Ansprüche,
**dadurch gekennzeichnet,**
**dass** infolge der Verbindungsannahme durch die zweite Endeinrichtung (EG2) und des Eintreffens der zweiten Nutzdatenparameter (P2) bei der ersten Endeinrichtung (EG1) für die erste Endeinrichtung (EG1) spezifische, dritte Nutzdatenparameter von der ersten Endeinrichtung (EG1) an die zweite Endeinrichtung (EG2) übermittelt werden.

## Claims

1. Method for setting up a user data connection (NV) between a first terminal device (EG1) connected to a first connection controller (VS1) and a second terminal device (EG2) connected to a second connection controller (VS2),
**characterised in that**
a. connection setup signalling to the second connection controller (VS2) is initiated by the first terminal device (EG1) in the course of which first user data parameters (P1) specific to the first terminal device (EG1) are transmitted to one of the connection controllers (VS1,VS2),
b. in consequence of the connection setup signalling a connection setup message is transmitted without the first user data parameters (P1) from the second connection controller (VS2) to the second terminal device (EG2),
c. upon acceptance of the connection by the second terminal device (EG2) a connection acceptance message is transmitted from the second terminal device (EG2) to one of the connection controllers (VS1,VS2), and as a consequence thereof the first user data parameters (P1) are transmitted to the second terminal device (EG2), and
d. in consequence of the arrival of the first user data parameters (P1) at the second terminal device (EG2) the user data connection (NV) is set up from the second terminal device (EG2) to the first terminal device (EG1).

2. Method according to claim 1,
**characterised in that**
a. in consequence of the arrival of the connection setup message second user data parameters (P2) specific to the second terminal device (EG2) are transmitted from the second terminal device (EG2) to the first terminal device (EG1), and
b. in consequence of the arrival of the second user data parameters (P2) at the first terminal device (EG1) a user data partial connection (NTV) is set up from the first terminal device (EG1) to the second terminal device (EG2).

3. Method according to one of the preceding claims,
**characterised in that**
the user data connection (NV) and/or the user data partial connection (NTV) are/is set up while bypassing at least one of the connection controllers (VS1,VS2).

4. Method according to one of the preceding claims,
**characterised in that**
the first and the second connection controller are identical to each other.

5. Method according to one of claims 1 to 3,
**characterised in that**
- the first and the second connection controller (VS1,VS2) are connected via a further connection controller (VSA,VSB),
- in the course of the connection setup signalling at least
a. the first connection controller (VS1) transmits the first user data parameters (P1) to the further connection controller (VSA,VSB) or
b. the further connection controller (VSA,VSB) transmits the first user data parameters (P1) to the second connection controller (VS2).

6. Method according to claim 5,
**characterised in that**
user data parameters, messages in the course of the connection setup signalling and/or the connection acceptance message are transmitted between the first and the second connection controller (VS1,VS2) via the further connection controller (VSA,VSB) or
further user data parameters, messages in the course of the connection setup signalling and/or the connection acceptance message are transmitted between the first and the second connection controller (VS1,VS2) while bypassing the further connection controller (VSA,VSB).

7. Method according to one of claims 5 or 6,
**characterised in that**
in the course of the connection setup signalling at least one message containing the second user data parameters (P2) is transmitted between the second terminal device (EG2) and the first connection controller (VS1) while bypassing the second and the further connection controller (VS2,VSA,VSB).

8. Method according to one of the preceding claims,
**characterised in that**
in the course of the connection setup signalling
- the first connection controller (VS1) transmits the first user data parameters (P1) to the second connection controller (VS2) or
- the first connection controller (VS1) transmits a message without the second user data parameters (P2) to the second connection controller (VS2).

9. Method according to one of the preceding claims,
**characterised in that**
- a media server (MS) is connected to one of the connection controllers (VS1,VS2,VSA,VSB), and
- in the course of the connection setup signalling a preliminary user data connection (VNV) is set up between the media server (MS) and the first terminal device (EG1).

10. Method according to one of the preceding claims,
**characterised in that**
in consequence of the arrival of a message transmitted in the course of the connection setup signalling or of the first user data parameters (P1) at the second terminal device (EG2) the second terminal device (EG2) indicates an incoming connection.

11. Method according to one of the preceding claims,
**characterised in that**
in consequence of the acceptance of the connection by the second terminal device (EG2) a connection acceptance acknowledgment containing the first user data parameters (P1) is transmitted from the second connection controller (VS2) to the second terminal device (EG2).

12. Method according to one of the preceding claims insofar as dependent on claim 9,
**characterised in that**
in the course of the setting up of either the user data connection (NV) or the user data partial connection (NTV) or in the course of the connection setup signalling the preliminary user data connection (VNV) is cleared down.

13. Method according to one of the preceding claims,
**characterised in that**
in consequence of the reception of the connection acceptance message the first user data parameters (P1) are transmitted from the receiving connection controller (VS1,VS2,VSA,VSB) to the second terminal device (EG2).

14. Method according to one of the preceding claims,
**characterised in that**
in consequence of the arrival of the second user data parameters (P2) at the first terminal device (EG1) the first user data parameters (P1) are transmitted to the second connection controller (VS2).

15. Method according to one of the preceding claims,
**characterised in that**
in the course of the connection setup signalling, following the arrival of the second user data parameters (P2) at the first connection controller (VS1), a message is transmitted without the second user data parameters (P2) to the first terminal device (EG1).

16. Method according to one of the preceding claims,
**characterised in that**
in consequence of the connection acceptance by the second terminal device the second user data parameters (P2) are transmitted from the first connection controller (VS1) to the first terminal device (EG1).

17. Method according to one of the preceding claims,
**characterised in that**
in consequence of the connection acceptance by the second terminal device (EG2) and the arrival of the second user data parameters (P2) at the first terminal device (EG1) third user data parameters specific to the first terminal device (EG1) are transmitted from the first terminal device (EG1) to the second terminal device (EG2).

## Revendications

1. Procédé pour établir une liaison de données utiles (NV) entre un premier terminal (EG1) couplé à une première commande de liaisons (VS1) et une deuxième terminal (EG2) couplé à une deuxième commande de liaisons (VS2),
**caractérisé en ce que**
a) le premier terminal (EG1) initialise une signalisation d'établissement de liaison vers la deuxième commande de liaisons (VS2), dans le cadre de laquelle des premiers paramètres de données utiles spécifiques (P1) pour le premier terminal (EG1) sont transmis vers l'une des commandes de liaisons (VS1, VS2),
b) suite à la signalisation d'établissement de liaison, un message d'établissement de liaison sans les premiers paramètres de données utiles (P1) est transmis de la deuxième commande de liaisons (VS2) vers le deuxième terminal (EG2),
c) à l'acceptation de la liaison par le deuxième terminal (EG2), un message d'acceptation de liaison est transmis du deuxième terminal (EG2) vers l'une des commandes de liaisons (VS1, VS2) et, suite à cela, les premiers paramètres de données utiles (P1) sont transmis au deuxième terminal (EG2) et
d) suite à l'arrivée des premiers paramètres de données utiles (P1) au deuxième terminal (EG2), la liaison de données utiles (NV) est établie du deuxième terminal (EG2) vers le premier terminal (EG1).

2. Procédé selon la revendication 1, **caractérisé en ce que**
a) suite à une arrivée du message d'établissement de liaison, des deuxièmes paramètres de données utiles (P2) spécifiques pour le deuxième terminal (EG2) sont transmis du deuxième terminal (EG2) vers le premier terminal (EG1) et
b) suite à une arrivée des deuxièmes paramètres de données utiles (P2) au premier terminal (EG1), une liaison partielle de données utiles (NTV) est établie du premier terminal (EG1) vers le deuxième terminal (EG2).

3. Procédé selon l'une des revendications précédentes, **caractérisé en ce que** la liaison de données utiles (NV) et/ou la liaison partielle de données utiles (NTV) sont établies sans passer par au moins l'une des commandes de liaisons (VS1, VS2).

4. Procédé selon l'une des revendications précédentes, **caractérisé en ce que** les première et deuxième commandes de liaisons sont identiques entre elles.

5. Procédé selon l'une des revendications 1 à 3,
**caractérisé en ce que**
- les première et deuxième commandes de liaisons (VS1, VS2) sont couplées par l'intermédiaire d'une commande de liaisons supplémentaire (VSA, VSB),
- dans le cadre de la signalisation d'établissement de liaison, au moins
a) la première commande de liaisons (VS1) transmet les premiers paramètres de données utiles (P1) à la commande de liaisons supplémentaire (VSA, VSB) ou
b) la commande de liaisons supplémentaire (VSA, VSB) transmet les premiers paramètres de données utiles (P1) à la deuxième commande de liaisons (VS2).

6. Procédé selon la revendication 5, **caractérisé en ce que** des paramètres de données utiles, messages dans le cadre de la signalisation d'établissement de liaison et/ou le message d'acceptation de liaison sont transmis entre les première et deuxième commandes de liaisons (VS1, VS2) par l'intermédiaire de la commande de liaisons supplémentaire (VSA, VSB) ou **en ce que** d'autres paramètres de données utiles, messages dans le cadre de la signalisation d'établissement de liaison et/ou message d'acceptation de liaison sont transmis entre les première et deuxième commandes de liaisons (VS1, VS2) sans passer par la commande de liaisons supplémentaire (VSA, VSB).

7. Procédé selon l'une des revendications 5 ou 6, **caractérisé en ce que,** dans le cadre de la signalisation d'établissement de liaison, au moins un message avec les deuxièmes paramètres de données utiles (P2) est transmis entre le deuxième terminal (EG2) et la première commande de liaisons (VS1) sans passer par la deuxième commande de liaisons et la commande de liaisons supplémentaire (VS2, VSA, VSB).

8. Procédé selon l'une des revendications précédentes, **caractérisé en ce que,** dans le cadre de la signalisation d'établissement de liaison,
- la première commande de liaisons (VS1) transmet les premiers paramètres de données utiles (P1) à la deuxième commande de liaisons (VS2) ou
- la première commande de liaisons (VS1) transmet un message sans les deuxièmes paramètres de données utiles (P2) à la deuxième commande de liaisons (VS2).

9. Procédé selon l'une des revendications précédentes, **caractérisé en ce que**
- un serveur de média (MS) est couplé à l'une des commandes de liaisons (VS1, VS2, VSA, VSB) et
- dans le cadre de la signalisation d'établissement de liaison, une préliaison de données utiles (VNV) est établie entre le serveur de média (MS) et le premier terminal (EG1).

10. Procédé selon l'une des revendications précédentes, **caractérisé en ce que,** suite à l'arrivée d'un message transmis dans le cadre de la signalisation d'établissement de liaison ou des premiers paramètres de données utiles (P1) au deuxième terminal (EG2), le deuxième terminal (EG2) affiche une liaison entrante.

11. Procédé selon l'une des revendications précédentes, **caractérisé en ce que,** suite à l'acceptation de liaison par le deuxième terminal (EG2), un accusé d'acceptation de liaison avec les premiers paramètres de données utiles (P1) est transmis de la deuxième commande de liaison (VS2) vers le deuxième terminal (EG2).

12. Procédé selon l'une des revendications précédentes en tant que dépendante de la revendication 9, **caractérisé en ce que,** dans le cadre de l'établissement de la liaison de données utiles (NV) ou de la liaison partielle de données utiles (NTV) ou dans le cadre de la signalisation d'établissement de liaison, la préliaison de données utiles (VNV) est fermée.

13. Procédé selon l'une des revendications précédentes, **caractérisé en ce que,** suite à une réception du message d'acceptation de liaison, les premiers paramètres de données utiles (P1) sont transmis de la commande de liaisons réceptrice (VS1, VS2, VSA, VSB) vers le deuxième terminal (EG2).

14. Procédé selon l'une des revendications précédentes, **caractérisé en ce que,** suite à une arrivée des deuxièmes paramètres de données utiles (P2) au premier terminal (EG1), les premiers paramètres de données utiles (P1) sont transmis vers la deuxième commande de liaisons (VS2).

15. Procédé selon l'une des revendications précédentes, **caractérisé en ce que,** dans le cadre de la signalisation d'établissement de liaison, suite à une arrivée des deuxièmes paramètres de données utiles (P2) à la première commande de liaison (VS1), un message sans les deuxièmes paramètres de données utiles (P2) est transmis au premier terminal (EG1).

16. Procédé selon l'une des revendications précédentes, **caractérisé en ce que,** suite à l'acceptation de liaison par le deuxième terminal, les deuxièmes paramètres de données utiles (P2) sont transmis de la première commande de liaisons (VS1) vers le premier terminal (EG1).

17. Procédé selon l'une des revendications précédentes, **caractérisé en ce que,** suite à l'acceptation de liaison par le deuxième terminal (EG2) et l'arrivée des deuxièmes paramètres de données utiles (P2) au premier terminal (EG1), des troisièmes paramètres de données utiles spécifiques pour le premier terminal (EG1) sont transmis du premier terminal (EG1) au deuxième terminal (EG2).
